# EUROPEAN PATENT SPECIFICATION

(11) **EP 2 894 975 B1**
(45) Date of publication and mention of the grant of the patent: **28.11.2018**
(21) Application number: 13784020.3
(22) Date of filing: 13.09.2013
(51) Int. Cl.: A01N 1/02

(54) **SOLUTIONS FOR PROTECTING, PERFUSING AND STORING ORGANS DURING SURGICAL PROCEDURES IN PARTICULAR TRANSPLANTATIONS**
LÖSUNGEN FÜR DEN SCHUTZ, DIE PERFUSION UND DIE LAGERUNG VON ORGANEN WÄHREND CHIRURGISCHER EINGRIFFE INSBESONDERE TRANSPLANTATIONEN
SOLUTIONS POUR LA PROTECTION, LA PERFUSION ET LA STOCKAGE DES ORGANES PENDANT DES PROCÉDURES CHIRURGICALES EN PARTICULIER DES TRANSPLANTATIONS

(30) Priority: 14.09.2012 PL 40078012
(43) Date of publication of application: 22.07.2015
(73) Proprietor: Transmedium Sp. z o.o., 80-172 Gdansk (PL)
(72) Inventor: WOZNIAK, Michal, PL-81-881 Sopot (PL); SMOLENSKI, Ryszard Tomasz, PL-Sopot 81-814 (PL); KNAP, Narcyz, PL-80-255 Gdansk (PL)
(74) Representative: Witek, Rafal
(86) International application number: PCT/PL2013/050021
(87) International publication number: WO 2014/042545

(56) References cited:
- EP-A1- 0 580 444
- WO-A1-97/30713
- WO-A2-2006/052133
- WOLFGANG WALTHER ET AL: "use of the nuclease inhibitor aurintricarboxylic acid (ATA) for improved non-viral intratumoral in vivo gene transfer by jet-injection", THE JOURNAL OF GENE MEDECINE, vol. 7, 2005, pages 477-485, XP002718660,
- KIM HK ET AL: "Aurintricarboxylic acid inhibits endothelial activation, complement activation, and von Willebrand factor secretion in vitro and attenuates hyperacute rejection in an ex vivo model of pig-to-human pulmonary xenotransplantation", XENOTRANSPLANTATIONS, vol. 15, no. 4, 2008, pages 246-256, XP002718661,
- UTPAL GHOSH ET AL: "Induction of apoptosis by benzamide and its inhibition by aurintricarboxylic acid (ATA) in Chinese hamster V79 cells", MUTATION RESEARCH, vol. 554, 2004, pages 121-129, XP002718662,
- CHING-WEN CHEN ET AL: "Inhibition of cytokine-induced JAK-STAT signalling pathways by an endonuclease inhibitor aurintricarboxylic acid", BRITISH JOURNAL OF PHARMACOLOGY, vol. 137, 2002, pages 1011-1020, XP002718663,
- PFEIFFER STEFFEN ET AL: "HYPERACUTE LUNG REJECTION IN THE PIG-TO-HUMAN MODEL.III. PLATELET RECEPTOR INHIBITORS SYNERGISTICALLY MODULATE COMPLEMENT ACTIVATION AND LUNG INJURY", TRANSPLANTATION, vol. 75, no. 7, 15 April 2003 (2003-04-15) , pages 953-959, XP002718664,

## Description

The subject of the present invention is a bioprotectant solution meant for storing, protecting and perfusing human organs during surgical procedures, particularly during transplantation procedures. The scope of purposes of the solution encompasses perfusion and storage at low temperature of organs collected from a donor or a patient subjected to an operation.

The possibility of performing transplantations is one of the biggest achievements in medicine. The transplantological revolution, due to which transplantations have become a routine medical method applied in patients with terminal organ failure is the result of a considerable optimization of organ collection and transplantation. Novel immunosuppression techniques have been devised, as well as improved compositions of solutions for perfusing and storing organs. The termination of blood circulation in transplanted organs generates a state known as warm ischemia, during which irreversible damage may occur in the organ, precluding it from transplantation. The basic method of minimizing the negative effects of warm ischemia is hypothermia that limits the rate of metabolism generating a deficit of essential adenylates and increasing the supply of reactive oxygen and nitrogen species.

Many recipes for organ storage solutions are available from the state of the art. F. Belzer and J. Southard devised a solution, which became the standard for perfusing and storing kidneys, the liver, pancreas and heart (Belzer et al. (1994) Transplant Proc, 26, 550). This solution used a unique and heretofore unused ingredient as an osmotic colloid: hydroxyethyl starch, HES. This is a glucose polymer with a molecular mass of 1 50000-350000D. In comparison to other solutions, this one exhibited a significant efficacy in the protection of kidneys and livers for transplantation (Upadhya and Strasberg (2000) Hepatology, 31, 1115-1122). A solution for protecting and storing organs during transplantation and other surgical procedures, according to prior art, should consist of oncotically and osmotically active ingredients, electrolytes, antioxidants, cryoprotectants, cytoskeleton stabilizers, high-energy adenylate precursors, apoptosis inhibitors and an endothelium regeneration stimulator. International application WO 9618293 discloses equilibrated isotonic ionic solutions useful in transplantology. Solutions for storing and perfusing transplanted organs were described in European Surgical Research, vol. 24, nr 6, 1992, str. 339-348, Reckendorfer H. et al.: "Hepatic energy metabolism during hypothermic storage and reperfusion using different protecting solutions".

Walter et al. "Us of the nuclease inhibitor aurinotricarboxylic acid (ATA) for improved non-viral intratumoral in vivo gene transfer by jet-injection" discloses ability of ATA as an inhibitor for suppressing DNA cleavage due to nucleases activity, which is found desirable for gene transfer into tumor tissue and improves application of gene therapy in cancer treatment.

Utpal Ghosh et al. presents research on the role of basal level of PARP in cell growth, in the absence of external DNA damaging agent. PARP inhibitors have been considered as one of the potential candidates for tumor treatment in combination with radiation. Role of aurintricarboxylic acid (ATA) as an apoptosis inhibitor has been invesigated. (Utpal Ghosh et al. "Induction of apoptosis by benzamide and its inhibition by aurin tricarboxylic acid (ATA) in Chinese hamster V79 cells" Mutation Research 554, 2004, 121-129).

Ching-Wen Chen et al. demonstrated that the endonuclease inhibitor ATA can effectively inhibit JAK-STAT signalling pathways in murine RAW 264.7 macrophages in response to diffeerent cytokines. Cytokines comprise a large family of secreted glycoproteins that regulate fundamental biological processes including proliferation, differentiation, survival and specialized functions in host resistance to pathogens (Ching-Wen Chen et al. "Inhibition of cytokine-induced JAK-STAT signalling pathways by an endonuclease inhibitor aurintricarboxylic acid" British Journal of Pharmacology ,2002,137, 1011 ± 1020).

Pfeiffer S. et al. disloses ATA as antiplatelet agent. Platelet protein receptor adhesive interactions play an important role in amplification of complement activation during hyperacute lung rejection. Inhibiting recruitment of platelets at the site of initial immunologic injury to endothelial cells may protect porcine organs against thrombosis and inflammation during the initial exposure to human blood (Pfeiffer S. et al."Hyperacute lung rejection in the pig-to-human model. III. Platelet receptor inhibitors synergistically modulate complement activation and lung injury" Transplantation. 2003 Apr 15;75(7):953-9).

Publication by Kim HK et al. relates to the application of ATA during the perfusion of the lungs under physiological conditions, however it does not involve long-term cold storage conditions under nonphysiological cold storage conditions (Kim HK et al. "Aurintricarboxylic acid inhibits endothelial activation, complement activation, and von Willebrand factor secretion in vitro and attenuates hyperacute rejection in ex vivo model of pig-to-human pulmonary xenotransplantation" Xenotransplantations 2008 Jul-Aug;15(4):246-56 vol. 15, no. 4, 2008, 246-256).

Presently used procedures were designed over a dozen years ago, and not fully reflect current knowledge relating to tissue damage during transplantation. It is thus still a problem to create conditions for longer and safer possible storage of organs prior to surgical procedures. The rejection of transplanted organs, i.e. rejection during liver transplants, is the cause of 15%-25% mortality during the first year after the operation (Strasberg S.M. et al. (1994) Hepatology, 20:829). A transplantologist needs time to perform routine tests on the donor and recipient to undertake the necessary pre-surgery decisions. The above problem results in a need for the longest possible safe storage period of the collected organs.

The goal of the present invention is to deliver an improved solution which ensures the highly effective protection and storage of organs during transplantation and other surgical procedures. The goal of the present invention is to deliver a solution which warrants the effective bioprotection of the organ and the regeneration of the vascular endothelium. The goal of the present invention is to deliver a solution containing substrates that enable the regeneration of high-energy adenylates, compounds that neutralize reactive oxygen and nitrogen species, ones that prevent intracellular acidosis, limit cellular distension and that ensure an appropriate osmotic pressure.

The goal of the present invention is to deliver a solution limiting the effects of the circulatory release of the redox-active ion Fe²⁺, as well as one that limits apoptosis and the toxic effects of hydrogen peroxide, as a result of which it is possible to effectively protect organs for transplantation against the negative effects of low temperature and ischemia.

Unexpectedly, these goals were attained by the present invention.

It is hereby disclosed a solution for protecting, storing and perfusing organs during surgical procedures, particularly during transplantation.

The subject of the invention is a protective solution for organs comprising:
- trehalose at a concentration from 1 mM to 50 mM,
- inosine at a concentration from 0.1 mM to 5 Mm,
- α-ketobutyric acid or its salts at a concentration from 0.1 mM to 25 mM,
- aurintricarboxylic acid or its salts at a concentration from 0.01 mM to 1 mM,
- *N*-methylnicotinamide or its salts at a concentration from 0.1 mM to 5 mM.

Preferably, the solution contains lactobionic acid or its salts at a concentration from 50 mM to 200 mM.

Preferably, the solution contains potassium dihydrogen phosphate at a concentration from 5 mM to 50mM.

Preferably, the solution contains magnesium sulfate at a concentration from 0.1 mM to 30 mM.

Preferably, the solution contains hydroxyethyl starch at a concentration from 5 g/l to 100 g/l.

Preferably, the salts of lactobionic acid constitute salts of alkali metals or salts of alkali earth metals selected from calcium and magnesium.

Preferably, the salts of lactobionic acid constitute ammonium salts.

Preferably, salts of α-ketobutyric acid constitute salts of alkali metals or salts of alkali earth metals selected from calcium and magnesium.

Preferably, salts of α-ketobutyric acid constitute ammonium salts.

Preferably, salts of aurintricarboxylic acid constitute salts of alkali metals or salts of alkali earth metals selected from calcium and magnesium.

Preferably, salts of aurintricarboxylic acid constitute ammonium salts.

Preferably, salts of *N*-nicotinamide constitute salts of hydrochloride, hydrobromide, acetate, succinate, tartarate, *p*-toluenylsulphonate, or pyruvate.

Another subject of the invention is defined above solution for use in protection, storing and perfusion of organs during surgical procedures.

Preferably, the surgical procedure is transplantation.

Preferably, the organ is selected from a group comprising the kidneys, heart, lungs, pancreas, cornea, arteries or veins.

The next subject of the present invention is aurintricarboxylic acid or salts thereof for use in protecting, storing and perfusing of transplanted organs.

Preferably, the acid is used at a concentration of 0.01 mM to 1mM.

Preferably, aurintricarboxylic acid is used at a concentration of 0,01 mM to 1 mM.

The individual components of the solution composition according to the present invention perform the following functions.

α-ketobutyric acid and its salts with alkali metals or alkali earth metals or ammonium salts at a concentration from 0.1 mM to 25 mM function as non-protein catalase mimetics.

Inosine at a concentration from 0.1 mM to 5 mM is a chelator of redox-active iron, and thereby an inhibitor of the Fenton reaction,
Aurintricarboxylic acid (ATA) is a known dye for detecting aluminum in water, biological tissues and food products. Furthermore, it is a known inhibitor of DNA replication through the inhibition of ribonuclease and topoisomerase II activity. Unexpectedly, the inventors of the subject solution have demonstrated its unique properties and its use in the production of a solution for storing organs for transplantation.

Aurintricarboxylic acid and its salts with alkali metals and with alkali earth metals and its ammonium salt at a concentration from 0.01 mM to 1 mM unexpectedly exhibit the properties of an actin cytoskeleton stabilizer and a stabilizer of the pool of high-energy guanylates for the proper functioning of endothelial cell cytoskeletons, and moreover exhibit inhibitory properties against the catalytic domain of various forms of the CD45 phosphotyrosine phosphatase. This is one of the key factors that take part in acute graft rejection and in the etiopathogenesis of Graft-Versus-Host Disease, which in light of the above makes aurintricarboxylic acid and its salts alkali metals, alkali earth metals and ammonium salts a broad spectrum substituent of monoclonal antibodies that inhibit CD45.

Trehalose, at a concentration from 1 mM to 50 mM, exhibits cryoprotective and antioxidant properties, and stabilizes protein and membrane lipids molecules, human placental cells and vascular endothelium cells,
*N*-methylnicotinamide and its salts at a concentration from 0.1 mM to 5 mM is an NAD(P)⁺ metabolite , a cell cycle regulator and a molecule with anti-inflammatory activity.

The unique composition of α-ketobutyric acid and salts thereof, inosine, aurintricarboxylic acid and salts thereof, trehalose and *N*-methylnicotinamide according to the present invention guarantees its ability to effectively cryoprotect organs and regenerate vascular endothelium. The solution is characterised by properties unexpectedly ensuring protection for organs destined for transplantation against the deleterious effects of low temperature and ischemia. A unique, unexpected and experimentally proven feature is the protection and stimulation of the regenerative process of vascular endothelium cells susceptible to ischemic, thermic and oxidative stress.

The composition of the solution encompasses innovative components that eliminate the negative effects of hypothermia necessary for the prolonged storage of the organs such as decreased levels of ATP, GTP, NAD(P)⁺ and the induction of pro-apoptotic genes as well as eliminating the adverse effects of warm reperfusion of the transplanted organ, including oxidative stress related to the generation of reactive oxygen species.

The unique solution composition ensures the protection of the structural integrity of endothelial cells at the molecular level (stabilization of the cytoskeleton) and cellular level (protection of the topology of the endothelium cell membrane), as well as maintaining the maximum regenerative ability of endothelial cells during cold ischemia and warm reperfusion. The composition ensures the protection of the integrity of DNA in situations where it is threatened by the toxic effects of Fe(II) ions and against hydrogen peroxide in the presence of Fe(II) (conditions that simulate the reperfusion of a transplanted kidney).

Taking into account the undesirable potential bioprotective properties of known solutions, in the form of the redox-active glutathione molecule and considerable quantities of Fe²⁺ ions, the proposed solution composition according to the present invention lacks the aforementioned drawbacks. A solution according to the present invention is a bioprotective solution and a bioregenerative for the vascular endothelium. Meant for rinsing and the safe storage of organs, at low temperature a solution according to the present invention possesses unique properties such as bioprotection during cold ischemia and warm reperfusion, stabilization of the cytoskeleton and membrane topology of endothelial cells as well as increasing the regenerative potential of endotheliocytes for the regeneration of vascular endothelial cells in transplanted organs.

The solution is characterized by a composition appropriate for ensuring maximum protection of organs against the deleterious effects of low temperature and ischemia. A unique property of the solution is the additional, unexpected and experimentally confirmed protective and stimulating function of the regeneration of vascular endothelial cells at risk of ischemic, thermic and oxidative stress.

The composition of the solution encompasses innovative components that eliminate:
a) negative effects of the hypothermia necessary for prolonged organ storage such as decreased ATP, GTP and NAD(P)⁺ concentrations, and the induction of proapoptotic genes,
b) the toxic effects of the warm reperfusion of transplanted organs including oxidative stress caused by the formation of reactive oxygen species.

The unique composition guarantees:
a) protection of the integrity of the cellular structure of endothelial cells at the molecular level (stabilization of the cytoskeleton) and cellular level (protection of the topology of the endothelial cell membrane),
b) the maximum ability of endothelial cells to regenerate during cold ischemia and warm reperfusion,
c) the protection of the structural integrity of DNA under conditions of exposure to the toxic effects of Fe(II) ions and hydrogen peroxide in the presence of Fe(II) (conditions that mimic cold ischemia and warm reperfusion of transplanted kidneys; Stadlmann S. et al. (2002) Transplantation, 74, 1800-1803; Yu W. et al. (2012) Proc. Natl. Acad. Sci. U.S.A, 109, 6680-6685).

In the subsequent portion, the solution constituting the subject of the present invention is described under the name Blirt.
Fig. 1 The effect of inosine on the generation of the hydroxyl radical evaluated using a measurement of the hydroxylation of benzoic acid in phosphate buffer containing Fe²⁺ ions.
Fig. 2 Binding Fe²⁺ ions to inosine (NMR spectrum, Varian Gemini 300).
Fig. 3 The effect of inosine on the degradation of the plasmid pBR322 incubated with Fe²⁺ ions and/or hydrogen peroxide. Agarose gel lanes: 1. - control, 2. - Fe²⁺, 3. - Fe²⁺ + 2 mM inosine, 4. - Fe²⁺ + 2 mM 2'-deoxyinosine, 5. - Fe²⁺ + H₂O₂, 6. - Fe²⁺ + H₂O₂ + 2 mM inosine, 7. - Fe²⁺ + H₂O₂ + 2 mM 2'-deoxyinosine, 8. - Fe²⁺ + H₂O₂ + 1 mM inosine.
Fig. 4 Energy state of CPAE endothelium cells exposed to H₂O₂ for 24h.
Fig. 5 Viability of endothelial cells treated with an increasing concentration of H₂O₂.
Fig. 6 Enzymatic activity of the membrane CD45 phosphotyrosine phosphatase measured colorimetrically after 30 min. of incubation in the control and the Blirt solution.
Fig. 7A culture incubated for 24h in A). a standard medium, B). a known solution and C). Blirt solution.
Fig. 8 Control after A). 6h, B). 12h, and C). 24h of incubation.
Fig. 9 Cells incubated in a known solution for A). 6h, B). 12h, and C). 24h.
Fig. 10 Cells incubated in the Blirt solution for A). 6h, B). 12h, and C). 24h.
Fig. 11 Correlation between morphological changes observed under a confocal microscope (3 typical images).
Fig. 12 Culture of vascular endothelium cells incubated for A). 6h, B). 12h, and C). 24h in a standard medium after transferring into a standard medium for 24h.
Fig. 13 Culture of vascular endothelium cells incubated for A). 6h, B). 12h, and C). 24h in a known solution after transferring into a standard medium for 24h.
Fig. 14 Culture of vascular endothelium cells incubated for A). 6h, B). 12h, and C). 24h in the Blirt solution after transferring into a standard medium for 24h.

The present invention is illustrated using examples that do not limit its scope of protection.

### Example 1. Composition of the solution formulation

Examplary pharmaceutical formulation of the solution according to the present invention:
In 1L distilled water we dissolved:
a. Lactobionic acid (100 mM),
b. Potassium hydroxide (100 mM),
c. Trehalose dihydrate (30 mM),
d. KH₂PO₄ (25 mM),
e. MgSO₄ heptahydrate (5 mM),
f. Inosine (3 mM),
g. Sodium α-ketobutyrate (5 mM),
h. Hydroxyethyl starch (50 g/1),
i. Aurintricarboxylic acid ammonium salt (0.2 mM),
j. *N*-methylnicotinamide hydrochloride (1 mM),

Next, the pH of the resulting solution is brought to pH = 7.4 ± 0.1 using hydrochloric acid or sodium or potassium hydroxide. The resulting solution is maintained at a temperature of 0 ÷ 5°C.

### Example 2. Evaluation of the effect of inosine on the autooxidation of Fe²⁺ ions in phosphate buffer and on hydroxyl radical generation.

Fe²⁺ ions in phosphate buffer are autooxidized to Fe³⁺ ions, yielding one electron to an oxygen molecule, which generates the superoxide anion radical (O₂⁻). The superoxide anion radical dismutes to hydrogen peroxide (H₂O₂), which generates hydroxyl radicals in the presence of catalytic quantities of Fe²⁺ ions. The evaluation of the quantity of OH was performed by analyzing the product of the reaction of the hydroxyl radical with benzoic acid by way of the measurement of salicylic acid fluorescence.

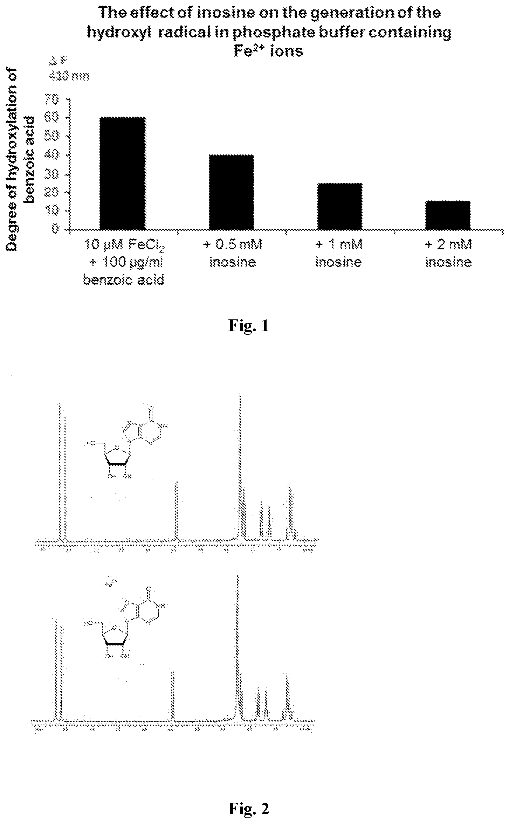

The results shown in Fig. 1 indicate that inosine prevents the generation of OH radicals in phosphate buffer containing Fe²⁺ ions with an efficacy proportional to its concentration.

### Example 3. Evaluation of the effect of inosine on deoxyribose ring damage.

Hydroxyl radicals catalyze the cracking of the deoxyribose ring, which is oxidized to ribose dialdehyde. With thiobarbituric acid, this forms a colourful adduct (TBARS) (Gutteridge et al. (1987) Biochem. J., 243, 709-714). As shown in Table 1, 1 mM deoxyribose incubated in phosphate buffer with Fe²⁺ ions (100 µM) generates a coloured reaction product with an absorbance of 0.280. The presence of the purine ring of hypoxanthine in deoxyinosine and inosine inhibits the degradation of the deoxyribose ring (Table 1).

**Table 1. The effect of inosine on deoxyribose damage under oxidative stress conditions.**

| **Incubation conditions** | **TBARS** |
|---|---|
| 100 µM Fe²⁺ 1mM deoxyribose | 0.280 |
| 100 µM Fe²⁺ 1mM deoxyribose 1mM inosine | 0.050 |
| 100 µM Fe²⁺ 1 mM deoxyinosine | 0.030 |
| 100 µM Fe²⁺ 1 mM deoxyinosine 1mM inosine | 0.000 |

The results obtained show that inosine can bind and inhibit the autooxidation of Fe²⁺ ions which generates toxic hydroxyl radicals. The evaluation of Fe²⁺ ion binding to the purine ring of inosine was performed using NMR. The decrease of proton signal intensity with a chemical shift of 8.15 ppm in the NMR spectrum of inosine is interpreted as an effect of the coordinate binding of metal ions to the N(7) nitrogen atom of the purine ring (Singel H., Naumann C., Prijs B.(1974) Eur. J. Biochem, 46, 589-593). As can be seen in Fig. 2, the incubation of inosine with Fe²⁺ ions (1 µM) resulted in a significant reduction of the intensity of proton signals in inosine molecules, which is a positive verification of the interaction of Fe²⁺ ions with the nucleoside purine ring.

### Example 4. Evaluation of the protective effect of inosine on plasmid DNA treated with Fe²⁺ ions and hydrogen peroxide (Fenton system).

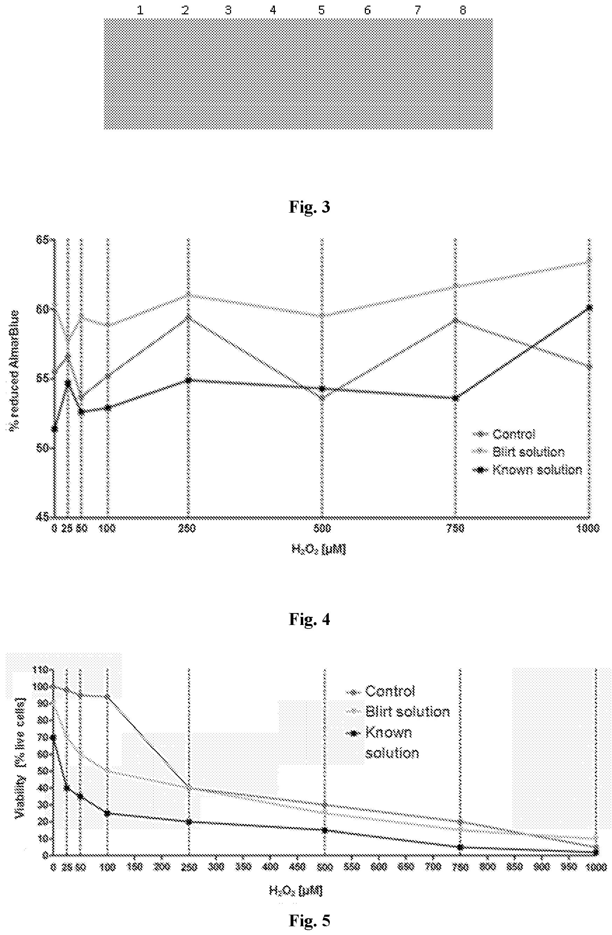

100 ng of the bacterial plasmid pBR322 (herein, a specific model of circular mitochondrial DNA) was incubated in 50 mM phosphate buffer (pH = 7,4) with Fe₂SO₄ (5 µM), H₂O₂ (100 µM) and inosine (1 mM or 2 mM) at room temperature for 60 min. Next, the DNA was separated in a 1% agarose gel at 80 V for 40 min. The control sample of plasmid DNA (untreated) is visible in the gel as a dominant band of the relatively rapidly migrating superhelical form (corresponding with the native form of the bacterial plasmid) as well as a trace band corresponding to the relaxed circular form, which migrates more slowly. Plasmid samples treated with iron (II) ions and/or hydrogen peroxide degrade, which is visible in the gel as a proportion reversal of the superhelical to the relaxed form. However, plasmid samples incubated with iron (II) ions and/or hydrogen peroxide in the presence of inosine appear comparable in an agarose gel to the control sample, which is evidence of the protective effect of inosine against potential DNA degradation induced by the hydroxyl radical in the Fenton system, as shown in Fig. 3. The protective mechanism is likely based on the complexing of iron (II) by inosine and, by the same token, inhibition of the formation of the highly reactive hydroxyl radical.

### Example 5. Evaluation of the effect of α-thioglycerol and trehalose on the oxidation of lipids in the cell membrane (human placental trophoblast cells).

A measure of the oxidation of cell membrane lipids of human placental cells was performed on the cell membranes obtained from microsomal membrane fractions centrifuged for 60 minutes at 100 000 x g. The microsomal fraction of human placental membranes was incubated for 10 minutes with 10 mM MgCl₂ to precipitate the cell membranes of the trophoblast cells. The precipitate was centrifuged for 12 minutes at 2200 x g. Next, 4.5 mg of human placental trophoblast cell membranes were incubated for 20 minutes in the presence of 250 µM cumene hydroperoxide (CumOOH) in the presence or absence of antioxidants, 3 µM α-thioglycerol and 30 mM trehalose. After 20 minutes of incubation, we determined the level of lipid peroxidation markers, malonic dialdehyde (MDA) and 4-hydroxynonenal (HNA) in the tubes.

The measurement is based on the reaction of *N*-methyl-2-phenyloindole with MDA and HNA at a temperature of 45°C. One molecule of MDA or HNA reacts with two chromogen molecules, yielding a coloured adduct with λₘₐₓ = 586nm (EsterbauerM., SchaurR.J., Zollner H. (1999) Free. Rad. Biol. Med., 11,81-128). The results are shown in Table 2 as the amount of MDA/HNA (in picomoles) per mg of cell membrane protein. As can be seen, the presence of α-thioglycerol and trehalose, particularly those administered together (trial 5 in comparison to trial 2), protects the lipids of cell plasma membranes of human placental trophoblast cells against peroxidation.

**Table 2: The effect of α-thioglycerol and trehalose on the oxidation of cell membrane lipids.**

| **Plasma membrane concentration [mg]** | **Cumene hydroperoxide concentration \|µM\|** | **α-thioglycerol concentration \|µM\|** | **Trehalose concentration \|µM\|** | **MDA/H NA level [pmol/ mg]** |
|---|---|---|---|---|
| 4.5 | - | - | - | 50 |
| 4.5 | 250 | - | - | 600 |
| 4.5 | 250 | 3 | - | 200 |
| 4.5 | 250 | - | 20 | 150 |
| 4.5 | 250 | 3 | 30 | 75 |

An analysis of the results indicates the much greater bioprotective activity of trehalose in relation to the classic antioxidant α-thioglycerol.

### Example 6. Evaluation of the cryoprotectant properties of the Blirt solution in relation to vascular endothelial cells.

A measurement of the metabolism of CPAE endothelial cells exposed to hydrogen peroxide for 24 hours using the AlamarBlue method indicates a considerable cytoprotectant component of the solution described in the present invention in comparison to a known solution and a standard cell medium (Fig. 4).

The above results indicate the preferable effects of the components of the solution according to the present invention under conditions that emulate the reperfusion of transplanted organs, during which the endothelial cells generate considerable quantities of hydrogen peroxide. In light of the experiments performed, the known solution contains a substantial quantity of hydrogen peroxide, thus we analyzed the percentage content of live cells after 24 hours of incubation in a known solution and in a solution according to the present invention in comparison to a classic cell medium (the control) in the presence of increasing concentrations of H₂O₂. The viability analysis was based on the staining of dead cells with acridine orange (Fig. 5).

An analysis of experimental results shows that endothelial cells treated for 24 hours with a known solution demonstrate up to 30% mortality, and the highest sensitivity to increasing H₂O₂ concentrations in the range from 25 µM to 100 µM. Endothelial cells incubated in a solution according to the present invention demonstrate over 90% viability and a dramatically reduced sensitivity to hydrogen peroxide in comparison to the known solution. This makes it possible to recommend sodium a-ketobutyrate and aurintricarboxylic acid as essential ingredients for the survival of reperfusion shock (transplantation) for endothelial cells.

### Example 7. Evaluation of the effect of the Blirt solution on the enzymatic activity of the CD45 membrane phosphotyrosine phosphatase which is the molecular mediator of acute graft rejection and graft against host disease.

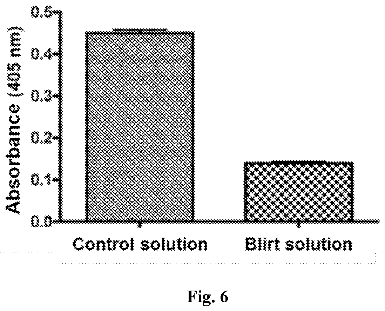

It was shown experimentally, that the Blirt solution significantly inhibits the enzymatic activity of the CD45 membrane phosphotyrosine phosphatase (Fig. 6). The enzyme was incubated for 30 min. in a buffered physiological saline solution (PBS), pH = 7.4 (control) and in Blirt solution. The enzymatic activity assay was performed colorimetrically, supplementing the reaction mixture with p-NPP (phenyl *para-*nitrophosphate) as a substrate for the phosphatase and measuring absorbance at a wavelength of λ = 405 nm. The results showed a significant reduction of the enzymatic activity of the CD45 membrane phosphotyrosine phosphatase in comparison to the control.

### Example 8. Evaluation of the survival of endothelial cells stored in Blirt solution.

To test cell viability, we used CPAE cells, immortalized vascular endothelial line of *Bos taurus* and confocal microscopy with phalloidin-tagging of the actin cytoskeleton. In the cytoplasm, phalloidin binds F actin (polymerized) and prevents its depolymerisation, inhibiting the ATPase activity of this protein. In effect, the cytoplasmic pool of actin monomers is greatly reduced, and all forms higher than G-actin are stabilized. Phalloidin conjugated with fluorescent dyes is used (usually green or red). At nanomolar levels (nmol/ml), this product facilitates the efficient marking, identification and quantitative determination of F-actin in cell cultures. This is of consequence in the evaluation of microtubule functioning during various cell cycle phases. Phalloidin-FITC staining facilitates the evaluation of the cytoskeleton.

Sterile 6-well plates were loaded with sterile cover slips (10x10mm). Cells were inoculated and after 24 h subjected to the evaluated solution for 6/12/24 h. After the set incubation times, the cells were rinsed with warm PBS buffer and fixed with cold 4% paraformaldehyde dissolved earlier in PBS (1ml/well) for 10 min. at room temperature. Next, the cells were rinsed 3-times with PBS. In order to permeabilize the cells, they were subjected to 0.1% Triton-XlOO in PBS buffer for 10 min. (2ml/well) at room temperature. Next, the cells were rinsed twice with PBS buffer. In order to stain the actin cytoskeleton, the cells were incubated with Phalloidin-FITC for 60 min. in darkness, at room temperature. Next, the cells were rinsed thrice with PBS buffer and left at a temperature of 4°C until confocal analysis.

**Table 3. Quantitative analysis of damaged cells in the culture.**

| | **Undamaged cells** | **Partially damaged cells** | **Damaged cells** |
|---|---|---|---|
| Control 6h | 99% | 1% | none |
| Control 12h | 97% | 3% | none |
| Control 24h | 97% | 3% | none |
| Known solution 6h | 2% | 20% | 78% |
| Known solution 12h | none | 15% | 85% |
| Known solution 24h | none | 5% | 95% |
| Blirt solution 6h | 20% | 70% | 10% |
| Blirt solution 12h | 8% | 65% | 27% |
| Blirt solution 24h | 5% | 60% | 35% |

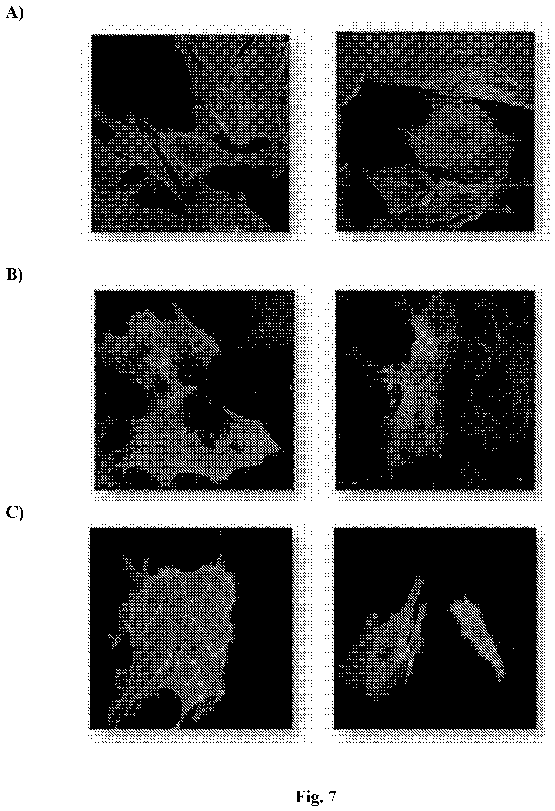

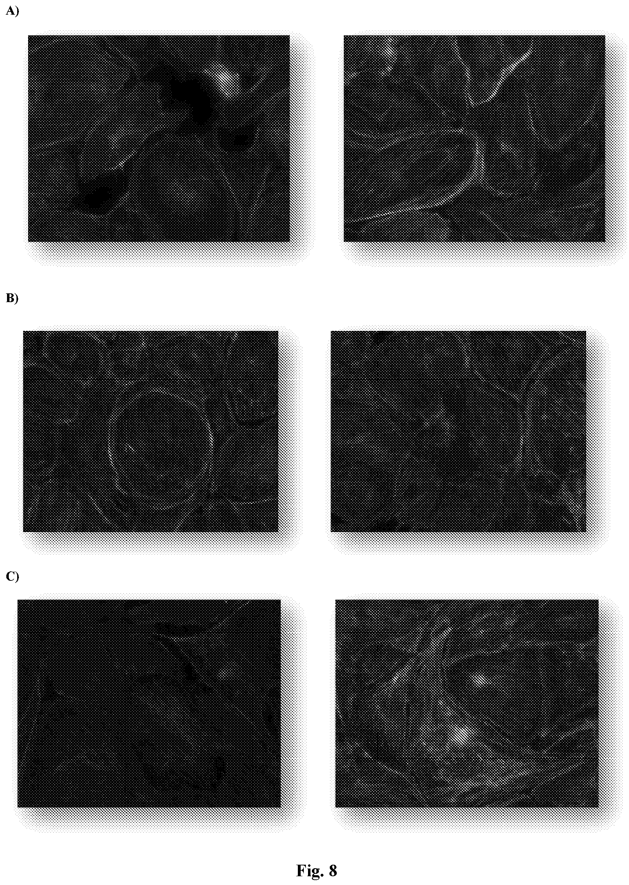

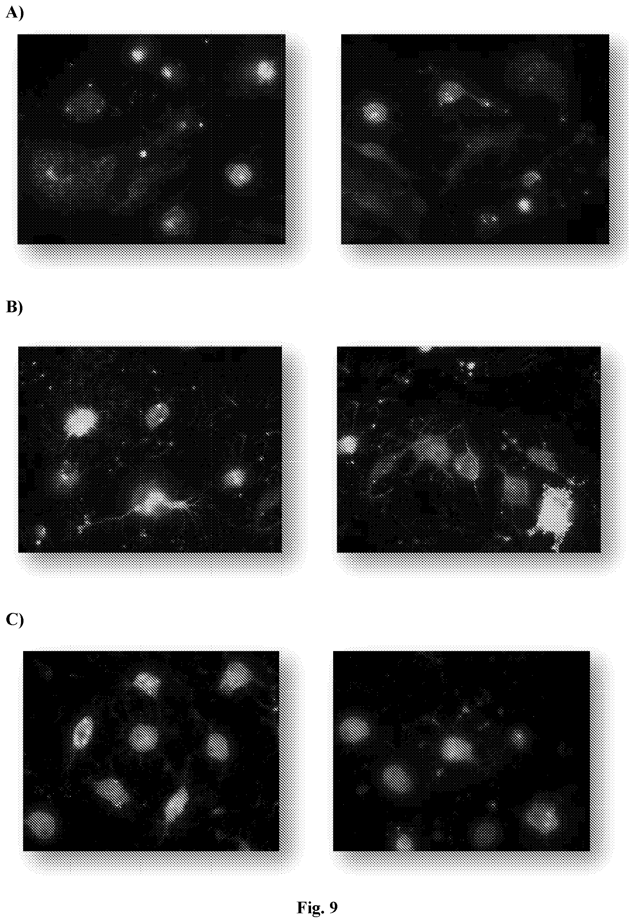

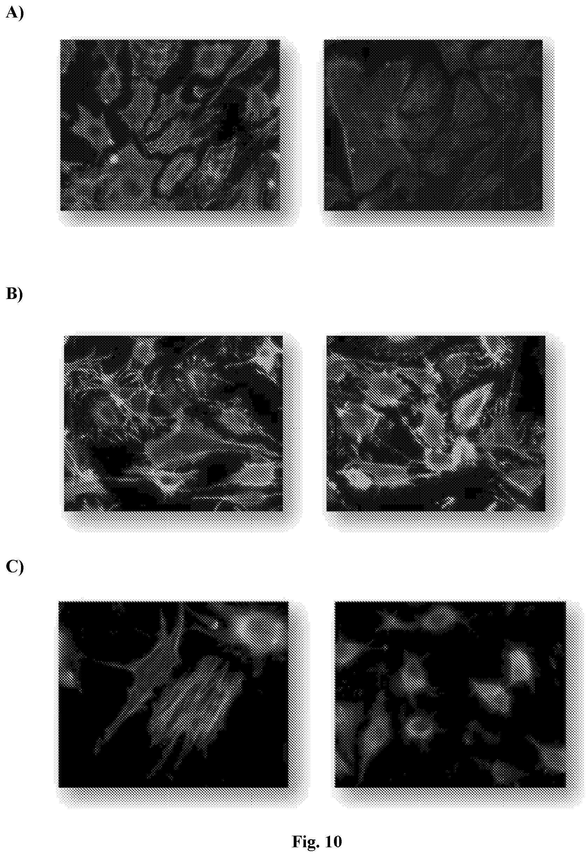

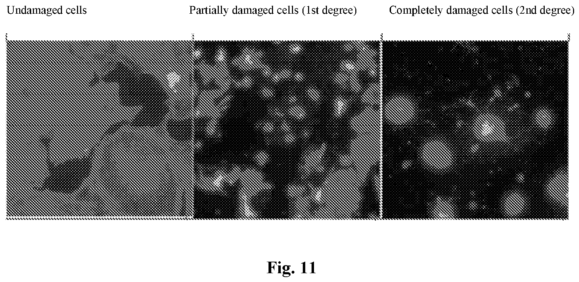

The experimental results (Fig. 7 - 11) show an increase in the survivability of cells incubated in the Blirt solution in comparison to known solution.

### Example 9. Evaluation of the regenerative capacity of endothelial cells

The regenerative capacity of endothelial cells was evaluated after a pre-incubation in a known solution and a solution according to the present invention and an exposition to a standard medium containing serum proteins. In the study we used the CPAE line, an immortalized vascular endothelium line (*Bos taurus*). The study was performed using confocal microscopy and phalloidin staining.

To test cell viability, we used CPAE cells, immortalized vascular endothelial line of *Bos taurus* and confocal microscopy with phalloidin-tagging of the actin cytoskeleton. In the cytoplasm, phalloidin binds F actin (polymerized) and prevents its depolymerisation, inhibiting the ATPase activity of this protein. In effect, the cytoplasmic pool of actin monomers is greatly reduced, and all forms higher than G-actin are stabilized. Phalloidin conjugated with fluorescent dyes is used (usually green or red). At nanomolar levels (nmol/ml), this product facilitates the efficient marking, identification and quantitative determination of F-actin in cell cultures. This is of consequence in the evaluation of microtubule functioning during various cell cycle phases. Phalloidin-FITC staining facilitates the evaluation of the cytoskeleton.

Sterile 6-well plates were loaded with sterile cover slips (10x10mm). Cells were inoculated and after 24-h subjected to the evaluated solution for 6/12/24 h. After the set incubation times, the cells were rinsed with warm PBS buffer and fixed with cold 4% paraformaldehyde dissolved earlier in PBS (1ml/well) for 10 min. at room temperature. Next, the cells were rinsed 3-times with PBS. In order to permeabilize the cells, they were subjected to 0.1% Triton-X100 in PBS buffer for 10 min. (2ml/well) at room temperature. Next, the cells were rinsed twice with PBS buffer. In order to stain the actin cytoskeleton, the cells were incubated with Phalloidin-FITC for 60 min. in darkness, at room temperature. Next, the cells were rinsed thrice with PBS buffer and left at a temperature of 4°C until confocal analysis.

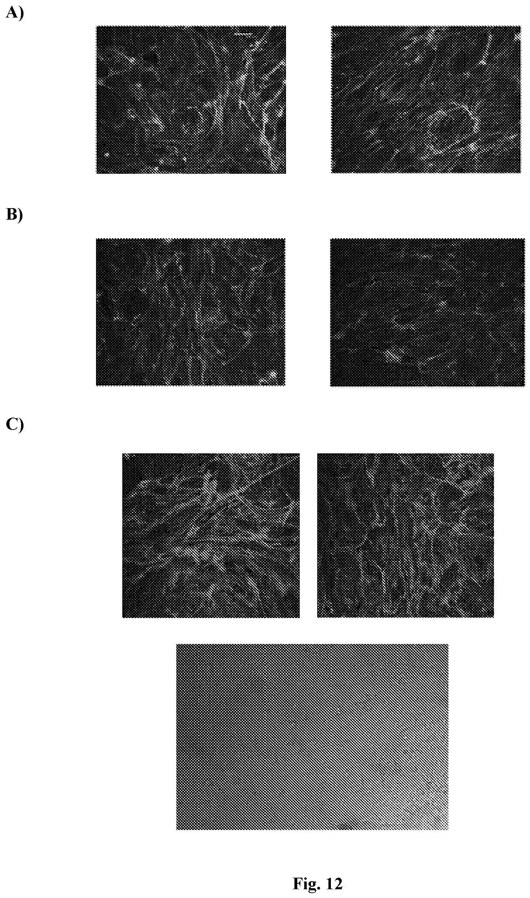

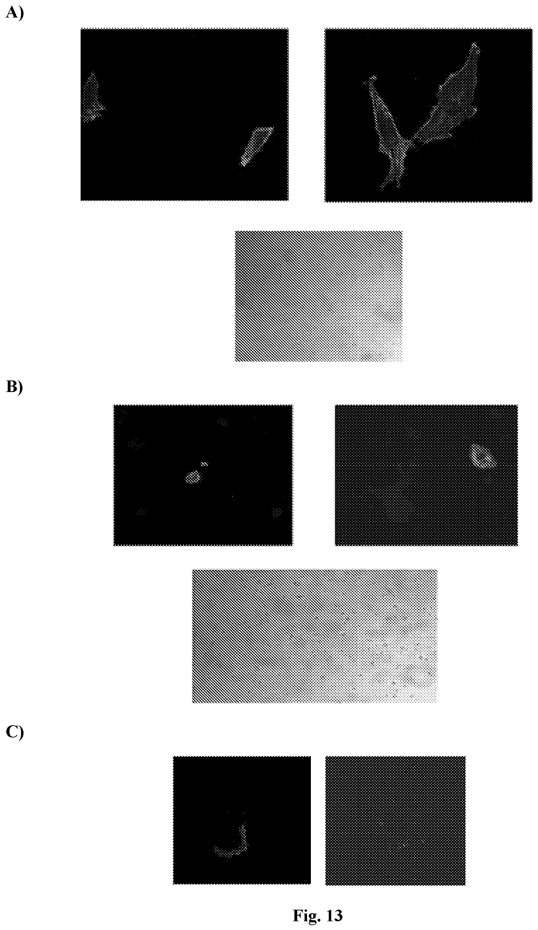

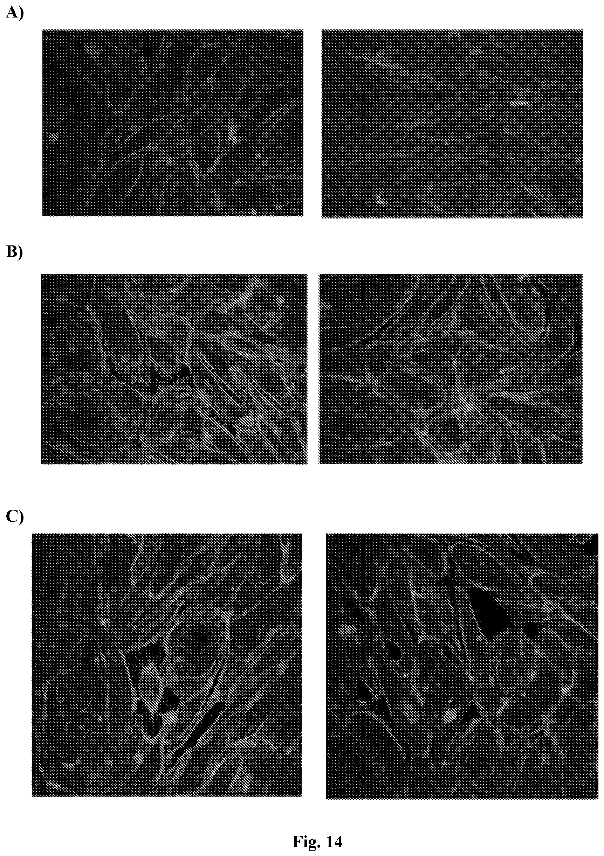

The regeneration of endothelium cells following 24 h of incubation in the medium after a preceding incubation in the transplantation solution was only visible in the solution according to the present invention, both in terms of morphology under a light microscope and in terms of actin skeleton under a fluorescent microscope. This is evidence that ATA is a pro-survival activator which acts as an insulin-like growth factor and thus an inhibitor of the apoptotic cell death, facilitating the survival of the damaged endothelium and stimulating its regeneration (Fig. 12 - 14).

### Example 10. Concentration measurements of ATP and GTP in endothelial cells

Using HPLC, we determined the levels of cellular ATP, ADP, AMP, GTP, GDP, and NAD using the procedure below. The cells were inoculated onto 24-well plates and after 24 h were subjected to the evaluated solutions for 6/12/24 h. After the set incubation times, the solution was collected from overtop the culture and placed in eppendorf-type centrifuge tubes (a). The culture was covered with 0.4 M HClO₄ (200 µl/well). The plates were covered with parafilm and frozen at -80°C for 24 h. The post-culture solutions (a) were centrifuged (2000 RPM) for 5 min. at room temperature. The precipitate was covered with 0.4 M HClO₄ (100 µl/tube) and frozen at -80°C for 24 h. Next, plates and tubes were defrosted on ice. Solution from the wells was loaded into appropriate tubes and centrifuged (14.000 RPM.) for 5 min. at a temperature of 4°C (b) The emptied wells were loaded with 0.5 M NaOH (300 µl/well) and left for 24 h at room temperature for a subsequent protein analysis (c). The centrifuged solution (b) was transferred into new tubes and neutralized with 3 M K₃PO₄ for 10 min., yielding pH = 5.5 ÷ 6 (4°C). The precipitates of point 6 were covered with 0.5 M NaOH (200 µl/tube) and left for a minimum of 24 h at room temperature for a subsequent protein quantity assay. The solution of point 7 was transferred into HPLC tubes (50 µl/tube) and analyzed. The remaining solution was frozen at a temperature of -20°C.

**Table 4. ATP and GTP concentrations in terms of nmol/plate.**

| | **ATP** | **GTP** |
|---|---|---|
| Control 6h | 0.508 | 0.0909 |
| Control 12h | 0.752 | 0.1385 |
| Control 24h | 0.839 | 0.1508 |
| Known solution 6h | 1.983 | 0.3492 |
| Known solution 12h | 0.242 | 0.0836 |
| Known solution 24h | 0.077 | 0.0000 |
| Blirt solution 6h | 1.028 | 0.4350 |
| Blirt solution 12h | 0.379 | 0.3011 |
| Blirt solution 24h | 0.183 | 0.2540 |

The results obtained indicate the selective protection of cellular GTP by the ingredients of a solution according to the present invention. Aurintricarboxylic acid stabilizes the cytoskeleton through stabilizing the level of GTP.

A comparative analysis of the bioprotective properties of a known solution and a solution according to the present invention indicates the limited bioprotective ability and relatively high toxicity of the components of the known solution. A solution according to the present invention is characterized by its high bioprotective capability, unique stabilization of the cytoskeleton and unexpected ability to stimulate vascular endothelium regeneration. The unique composition of the solution is a comprehensive alternative to solutions known from the state of the art in terms of cytoprotection, at the molecular and cellular levels.

A solution according to the present invention is useful for storing and protecting organs destined for transplantation or different surgical procedures. Such a solution may also be useful in the administration 0.25-1 1 into an artery during the collection of organs such as the kidneys, heart, lungs, liver, pancreas, cornea, arteries or veins to vascular systems for grafting. Following an infusion, the solution will constitute an environment in which the collected organs will be transported to the site of transplantation. The solution may also be used during different procedures, during which reversible ischemia can occur, such as open heart operations. During such procedures, a solution according to the present invention would be administered at the outset of the procedure. The use of a solution according to the present invention would be combined with hypothermia of 20 ÷ 28°C during procedures on the open heart, or 3 ÷ 8°C during organ transport prior to transplantation.

## Claims

1. Protective solution for organs comprising:
- trehalose at a concentration from 1 mM to 50 mM,
- inosine at a concentration from 0.1 mM to 5 Mm,
- the acid α-ketobutyric acid or its salts at a concentration from 0.1 mM to 25 mM,
- aurintricarboxylic acid or its salts at a concentration from 0.01 mM to 1 mM,
- *N*-methylnicotinamide or its salts at a concentration from 0.1 mM to 5 mM.

2. A solution according to Claim 1, **characterised in that** it comprises the lactobionic acid or its salts at a concentration from 50 mM to 200 mM.

3. A solution according to Claim 1, **characterised in that** it comprises potassium dihydrogen phosphate at a concentration from 5 mM to 50mM.

4. A solution according to Claim 1, **characterised in that** it comprises magnesium sulfate at a concentration from 0.1 mM to 30 mM.

5. A solution according to Claim 1, **characterised in that** it comprises hydroxyethyl starch at a concentration from 5 g/l to 100 g/l.

6. A solution according to Claim 2, **characterised in that** the salts of lactobionic acid constitute salts of alkali metals or salts of alkali earth metals selected from calcium and magnesium.

7. A solution according to Claim 1, **characterised in that** salts of α-ketobutyric acid constitute salts of alkali metals or salts of alkali earth metals selected from calcium and magnesium.

8. A solution according to Claim 1, **characterised in that** salts of aurintricarboxylic acid constitute salts of alkali metals or salts of alkali earth metals selected from calcium and magnesium.

9. A solution according to Claim 1 or 2, **characterised in that** salts of lactobionic acid, α-ketobutyric acid and aurintricarboxylic acid constitute ammonium salts.

10. A solution according to Claim 1, **characterised in that** salts of N-methylnicotinamide constitute salts of hydrochloride, hydrobromide, acetate, succinate, tartarate, *p-*toluenylsulphonate, pyruvate.

11. A solution as defined in Claims 1-10 for use in protection, storing and perfusion of organs during surgical procedures.

12. A solution for use in protection, storing and perfusion of organs during surgical procedures according to claim 11 wherein the surgical procedure is transplantation.

13. A solution for use in protection, storing and perfusion of organs during surgical procedures according to claim 11 wherein the organ is selected from a group comprising the kidneys, heart, lungs, liver, pancreas, cornea, arteries or veins.

14. Aurintricarboxylic acid or salts thereof for use in ex vivo protecting, storing and perfusing of transplanted organs.

15. Aurintricarboxylic acid or salts thereof for use according to claim 14 wherein the aurintricarboxylic acid is used at a concentration of 0.01 mM to 1 mM.

## Patentansprüche

1. Schutzlösung für Organe, umfassend:
- Trehalose in einer Konzentration von 1 mM bis 50 mM,
- Inosin in einer Konzentration von 0,1 mM bis 5 mM,
- α-Ketobuttersäure oder ihre Salze in einer Konzentration von 0,1 mM bis 25 mM,
- Aurintricarbonsäure oder ihre Salze in einer Konzentration von 0,01 mM bis 1 mM,
- N-Methylnikotinamid oder seine Salze in einer Konzentration von 0,1 mM bis 5 mM.

2. Eine Lösung nach Anspruch 1, dadurch charakterisiert, dass sie Lactobionsäure oder ihre Salze in einer Konzentration von 50 mM bis 200 mM umfasst.

3. Eine Lösung nach Anspruch 1, dadurch charakterisiert, dass sie Kaliumdihydrogenphosphat in einer Konzentration von 5 mM bis 50 mM umfasst.

4. Eine Lösung nach Anspruch 1, dadurch charakterisiert, dass sie Magnesiumsulfat in einer Konzentration von 0,1 mM bis 30 mM umfasst.

5. Eine Lösung nach Anspruch 1, dadurch charakterisiert, dass sie Hydroxyethylstärke in einer Konzentration von 5 g/l bis 100 g/l umfasst.

6. Eine Lösung nach Anspruch 2, dadurch charakterisiert, dass die Salze von Lactobionsäure Salze von Alkalimetallen oder Salze von Erdalkalimetallen ausgewählt aus Kalzium und Magnesium sind.

7. Eine Lösung nach Anspruch 1, dadurch charakterisiert, dass die Salze von α-Ketobuttersäure Salze von Alkalimetallen oder Salze von Erdalkalimetallen ausgewählt aus Kalzium und Magnesium sind.

8. Eine Lösung nach Anspruch 1, dadurch charakterisiert, dass die Salze von Aurintricarbonsäure Salze von Alkalimetallen oder Salze von Erdalkalimetallen ausgewählt aus Kalzium und Magnesium sind.

9. Eine Lösung nach Anspruch 1 oder 2, dadurch charakterisiert, dass die Salze von Lactobionsäure, α-Ketobuttersäure und Aurintricarbonsäure Ammoniumsalze sind.

10. Eine Lösung nach Anspruch 1, dadurch charakterisiert, dass die Salze von N-Methylnikotinamid Salze von Hydrochlorid, Hydrobromid, Acetat, Succinat, Tartrat, p-Toluolsulfonat, Pyruvat sind.

11. Eine Lösung wie in Ansprüchen 1-10 definiert zur Verwendung bei Schutz, Aufbewahren und Perfusion von Organen während Operationen.

12. Eine Lösung zur Verwendung bei Schutz, Aufbewahren und Perfusion von Organen während Operationen nach Anspruch 11, wobei die Operation Transplantation ist.

13. Eine Lösung zur Verwendung bei Schutz, Aufbewahren und Perfusion von Organen während Operationen nach Anspruch 11, wobei das Organ ausgewählt ist aus einer Gruppe umfassend die Nieren, Herz, Lungen, Leber, Pankreas, Hornhaut, Arterien oder Venen.

14. Aurintricarbonsäure oder ihre Salze zur Verwendung bei ex vivo Schutz, Aufbewahren und Perfusion von transplantierten Organen.

15. Aurintricarbonsäure oder ihre Salze zur Verwendung nach Anspruch 14, wobei die Aurintricarbonsäure in einer Konzentration von 0,01 mM bis 1 mM verwendet wird.

## Revendications

1. Solution protectrice pour organes, comprenant :
- du tréhalose à une concentration allant de 1 mM à 50 mM,
- de l'inosine à une concentration allant de 0,1 mM à 5 mM,
- de l'acide α-cétobutyrique ou ses sels à une concentration allant de 0,1 mM à 25 mM,
- de l'acide aurintricarboxylique ou ses sels à une concentration allant de 0,01 mM à 1 mM,
- du *N*-méthylnicotinamide ou ses sels à une concentration allant de 0,01 mM à 5 mM.

2. Solution selon la revendication 1, **caractérisée en ce qu'**elle comprend l'acide lactobionique ou ses sels à une concentration allant de 50 mM à 200 mM.

3. Solution selon la revendication 1, **caractérisée en ce qu'**elle comprend du dihydrogénophosphate de potassium à une concentration allant de 5 mM à 50 mM.

4. Solution selon la revendication 1, **caractérisée en ce qu'**elle comprend du sulfate de magnésium à une concentration allant de 0,1 mM à 30 mM.

5. Solution selon la revendication 1, **caractérisée en ce qu'**elle comprend de l'amidon hydroxyéthylé à une concentration allant de 5 g/l à 100 g/l.

6. Solution selon la revendication 2, **caractérisée en ce que** les sels d'acide lactobionique constituent des sels de métaux alcalins ou des sels de métaux alcalinoterreux sélectionnés parmi le calcium et le magnésium.

7. Solution selon la revendication 1, **caractérisée en ce que** les sels d'acide α-cétobutyrique constituent des sels de métaux alcalins ou des sels de métaux alcalinoterreux sélectionnés parmi le calcium et le magnésium.

8. Solution selon la revendication 1, **caractérisée en ce que** les sels d'acide aurintricarboxylique constituent des sels de métaux alcalins ou des sels de métaux alcalinoterreux sélectionnés parmi le calcium et le magnésium.

9. Solution selon la revendication 1 ou 2, **caractérisée en ce que** les sels d'acide lactobionique, d'acide α-cétobutyrique et d'acide aurintricarboxylique constituent des sels d'ammonium.

10. Solution selon la revendication 1, **caractérisée en ce que** les sels de N-méthylnicotinamide constituent des sels de chlorhydrate, de bromhydrate, d'acétate, de succinate, de tartrate, de *p*-toluénylsulfonate, de pyruvate.

11. Solution telle que définie dans les revendications 1-10 pour utilisation dans la protection, la conservation et la perfusion d'organes au cours d'interventions chirurgicales.

12. Solution pour utilisation dans la protection, la conservation et la perfusion d'organes au cours d'interventions chirurgicales selon la revendication 11, dans laquelle l'intervention chirurgicale est une transplantation.

13. Solution pour utilisation dans la protection, la conservation et la perfusion d'organes au cours d'interventions chirurgicales selon la revendication 11, dans laquelle l'organe est sélectionné dans un groupe comprenant les reins, le coeur, les poumons, le foie, le pancréas, la cornée, les artères ou les veines.

14. Acide aurintricarboxylique ou sels de celui-ci pour utilisation dans la protection, la conservation et la perfusion ex vivo d'organes transplantés.

15. Acide aurintricarboxylique ou sels de celui-ci pour utilisation selon la revendication 14, dans lequel l'acide aurintricarboxylique est utilisé à une concentration allant de 0,01 mM à 1 mM.
